# EUROPEAN PATENT APPLICATION

(11) **EP 4 647 157 A1**
(43) Date of publication of application: **12.11.2025**
(21) Application number: 24174576.9
(22) Date of filing: 07.05.2024
(51) Int. Cl.: B01J 8/00, B01J 8/02, B01J 20/34

(54) **TRANSIENT INDUCTIVE HEATING**

(71) Applicant: Nederlandse Organisatie voor toegepast-natuurwetenschappelijk Onderzoek TNO, 2595 DA 's-Gravenhage (NL)
(72) Inventor: The designation of the inventor has not yet been filed
(74) Representative: Nederlandsch Octrooibureau

(57) **Abstract**

The current invention concerns a reactor for transient induction heating and a method of induction heating of such reactor. In transient heating different zones of the reactor undergo more or less intense heating as a function of time. The reactor of the invention is divided into different zones and each zone comprises electrically conductive elements having a different diameter compared to the other zones.

## Description

### Introduction

Industrial scale chemical processes are performed in reactors that often require heating. Resistive heating is the process of generating heat in an electrically conductive materials by passing an electric current through the material, wherein the electric current is directly applied to the conductive material. Reactor systems wherein the catalyst is heated using resistive heating are known, for example from WO2019228798. WO2019228798 describes a structured catalyst comprising a 3D macroscopic structure supporting a ceramic catalyst coating. An electric current is passed through the macroscopic structure, thereby heating the structure by resistive heating and indirectly the catalyst via thermal contact with the structure.

Induction heating (or induction heating) is also a process of generating heat in an electrically conductive materials by passing an induced electric current (or secondary current) through the material (i.e. eddy energy losses). However, induction heating is different from resistive heating in that the current is generated by a rapidly alternating magnetic field penetrating the material (electromagnetic induction). The electric currents thus generated are called eddy currents. A rapidly alternating magnetic field is generated by an induction coil that is typically wound around the reactor. Ideally, the relevant material (catalyst, sorbent etc.) inside the reactor would be made of material susceptible to induction heating, such that it can be targeted directly by induction heating. However, from a materials perspective this is difficult to achieve. Therefore, the relevant material is typically contacted with a structure susceptible to induction heating, for example the wall of the reactor, rods protruding the reactor, or the material is coated on particles that are susceptible to induction heating. The heat is then transferred to the relevant material via thermal conduction.

Latifi et al. (AICHE Journal, vol 61, no 5 p1507-153, 2015) discloses a reactor comprising metal rods for induction heating of a fluidized bed. EP 0363066 A2 discloses a reactor comprising an inductive heatable, fluid permeable reactor element; a monolith. KR 102063414 B1 concerns a reactor stacked with catalytic pellets that may be susceptible to induction heating. In addition, a central metal rod may be present that may be heated by induction heating.

In some processes the need for heating is transient, meaning that different zones of the reactor need more or less intense heating as a function of time. One example of such process is the regeneration of an adsorption bed: heating is required where desorption takes place. In case a mass transfer zone (MTZ) forms, this is where heat is required. Heating should be applied when the MTZ passes or before. Other sections of the bed, that are already dry, do not require heating. Heating of these zone even may be disadvantageous as the relevant material may be negatively affected by the heating. Other processes that benefit from transient heating are catalysed endothermic chemical reactions with progressive catalyst deactivation (steam reforming, reverse water-gas shift, ammonia decomposition for example) in which progressively less heat is required as the catalyst progressively deactivates over the length of the reactor. Furthermore, transient heating is beneficial for catalysed and non-catalysed endothermic chemical reactions in which the throughput varies over time.

There is a need for a reactor and a method for transient induction heating. There is need for such reactor that is efficient and easy to operate.

### Summary of the invention

The inventors surprisingly found a reactor and a method for transient induction heating. By having electrically conductive elements in a tubular reactor that differ in diameter in the axial direction of the reactor, the susceptibility for induction heating varies in the axial direction of the reactor as a function of the frequency of the alternating magnetic field that is generated in the reactor. For some frequencies all electrically conductive elements will produce heat, however there are frequencies below which part of elements will hardly produce heat, depending on the diameter of the elements. The reason is that for a small diameter the eddy currents that are produced on one side of the element cancel the eddy currents produced on the other side of the element, resulting that no or only a low current is generated and therewith no or only low energy dissipation and heating occurs. The level of current cancellation depends on the frequency and the diameter. By steering the frequency in time in combination with having elements with different diameters in different parts of the reactor, different parts of the reactor receive a different heat load in time.

Such transient heating is especially useful for cyclically operated continuous processes, so processes in which a reactor with a solid content needs to be regenerated after a certain period and another regenerated reactor takes over the function of the first reactor during that regeneration.

Typically for such process, heat is needed for the reaction as the reaction is endothermic or heat is needed for the regeneration of the sorbent so for the desorption. In addition, typically the need for heat is not uniform in the axial direction over time. Cyclically operated continuous processes are for example sorption processes, processes in which sorption is combined with reaction or processes in which the catalyst deactivates in a relative short timespan and needs regeneration. In these processes there is a reaction or regeneration front present in the reactor that needs heat, but other parts of the reactor need less or no heat, either because the sorbent or catalyst in that part is already regenerated or inactivated or because the sorbent or catalyst in that part does not yet actively participate in reaction or regeneration. The front moves over time from the beginning of the reactor towards the end of the reactor, so the location in the reactor where most of the heat is needed differs over time. By applying heat to only some zones of the reactor, energy can be saved. In addition, the materials that are comprised in the reactor receive overall less heat, which is beneficial for the lifespan of that material.

The current invention combines the known benefits of induction heating with the benefits of transient heating.

### Brief description of the drawings

The present invention will be discussed in more detail below, with reference to the attached drawings.
Figure 1 depicts the coil efficiency (%) on the y-axis as a function of the frequency (kHz) of the alternating magnetic field on the x-axis for a wire having a specific diameter. Below a frequency F1 the coil efficiency decreases due to current cancellation.
Figure 2 depicts the power transmission factor F_{TRANS} (-) on the y-axis as a function of d/δ (-), d/δ is the cylinder or ball diameter d divided by the penetration depth δ. Below a critical d/δ of 3.2 the power transmission factor decreases due to current cancellation.

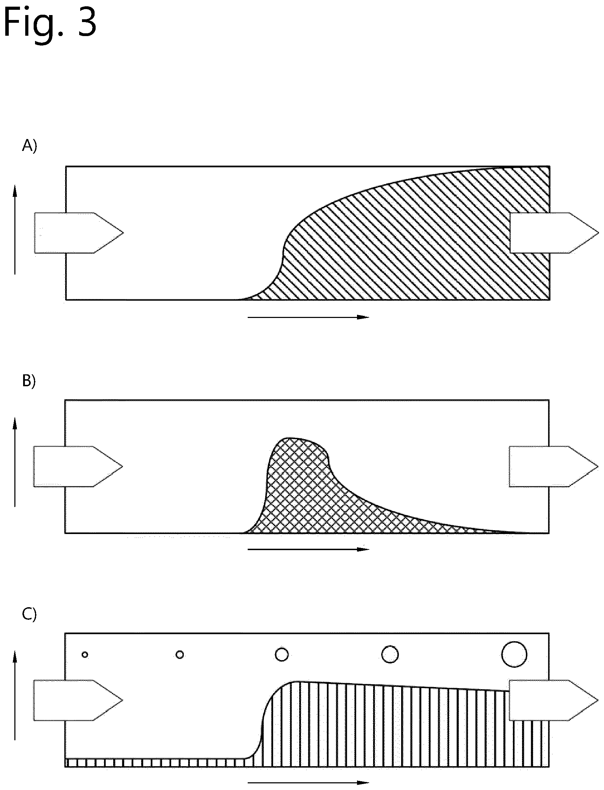

Figure 3 depicts an intermittent stage during sorbent bed drying. The y-axis represents the length of the reactor. On the left side a carrier gas is introduced and on the right side the carrier gas together with the adsorbate leaves the reactor. In figure 3 A) the remaining adsorbate loading of the sorbent is on the x-axis. The dashed area is the adsorbate loading of the sorbent. The right half of the reactor comprises saturated sorbent and a front is present halfway the reactor. In figure 3 B) the heat demand is on the x-axis. The dashed area is the heat demand, most heat is needed near the front, halfway the reactor, as at that point the adsorbate needs to be desorbed. In figure 3 C) the heat generation is on the x-axis. On the top of figure 3 C) the element diameter is depicted by circles; the reactor comprises 5 zones with increasing element diameter depicted as circles with increasing diameter. In figure 3 C) the frequency is selected so that only the last three zones are heated. The heat generation is visible as the dashed area.

### Detailed Description

In a first embodiment the invention concerns a reactor system comprising a tubular reactor and an induction heating coil surrounding the tubular reactor and a power source suitable for supplying an alternating current to the induction heating coil, wherein the tubular reactor comprises elements of an electrically conductive material and a solid selected from a catalyst, a sorbent, a solid reactant or a combination thereof, wherein the tubular reactor comprises one or more inlets and one or more outlets wherein the one or more inlets and the one or more outlets are placed on the opposite sides of the tubular reactor, wherein the tubular reactor is divided in different zones, wherein the zones are adjacent to each other going from the one or more inlets to the one or more outlets, wherein
- for each zone downstream of the first zone the diameter of the elements is larger than the maximum element diameter of the of the adjacent upstream zone, or
- for each zone downstream of the first zone the diameter of the elements is smaller than the minimum diameter of the elements of the adjacent upstream zone,
and wherein
- the elements have a diameter in the range of 0.1 - 30 mm,
- the volume of the total of the elements of electrically conductive material comprised in the tubular reactor is less than 40 vol.% of the total empty reactor volume, and
- the alternation frequency of the alternating current is adjustable,
wherein the first zone is the zone adjacent to the one ore more inlets and wherein the elements are wires, particles and/or closed loops of connected wires.

Furthermore, the invention concerns a method for induction heating of the tubular reactor comprised in the reactor system according to the invention wherein the power source supplies an alternating current to the induction heating coil and wherein in two or more sequential steps the alternation frequency is changed, wherein for each step:
- the frequency increases with a factor of 1.5 or higher compared to the frequency of the previous step wherein for each zone downstream of the first zone the diameter of the elements is smaller than the minimum diameter of the elements of the adjacent upstream zone, or
- the frequency decreases with a factor of 0.66 or lower compared to the frequency of the previous step wherein for each zone downstream of the first zone the diameter of the elements is larger than the maximum diameter of the elements of the adjacent upstream zone.

The invention also concerns a method for desorbing an adsorbate from a sorbent that is placed in the tubular reactor comprised in the reactor system according to the invention wherein the tubular reactor is heated according to the method for induction heating according to the invention, wherein the sorbent preferably is in the form of a particulate solid and wherein the adsorbate that is desorbed from the sorbent exits the reactor through the one or more outlets, preferably wherein a feed is provided through the one or more inlets in the form of a carrier gas.

In addition, the invention concerns a method for carrying out an endothermic reaction in in the tubular reactor comprised in the reactor system of any one of claims 1 - 6 wherein the tubular reactor is heated according to the method for induction heating according to any one of claims 7 - 11, wherein the tubular reactor comprises a catalyst preferably in the form of a particulate solid and wherein the reaction product exits the reactor through the one or more outlets and a feed is provided through the one or more inlets, preferably wherein the reaction is selected from the list consisting of steam reforming, reverse water-gas shift reaction and ammonia decomposition.

Preferably the reactor comprises a catalyst and/or a sorbent, more preferably a particulate catalyst and/or a particulate sorbent.

### Current cancellation in induction heating

Induction heating is a process that uses electromagnetic induction to heat electrically conductive materials without direct contact. To realize induction heating typically a reactor is surrounded by an induction heating coil. By having an alternating current through this coil, the coil generates an alternating magnetic field in the reactor. The frequency of the alternating current is the frequency F of the alternating magnetic field. For induction heating of a reactor for a given frequency the heating efficiency depends amongst others on the diameter d of the electrically conductive element that is present in the reactor and on the penetration depth δ of the current generated. Typically, the eddy currents concentrate on the surface of the electrically conductive element and only penetrates a limited depth δ. Typical elements are wires and/or particles.

The phenomenon of current cancellation may become relevant at specific ratios of d over δ. Induced eddy currents circulating on opposite sides of the element may cancel each other. Due to this current cancellation less or no heat is generated. If for a given element diameter d the penetration depth δ increases or if for a given penetration depth δ the element diameter d decreases current cancellation may become relevant.

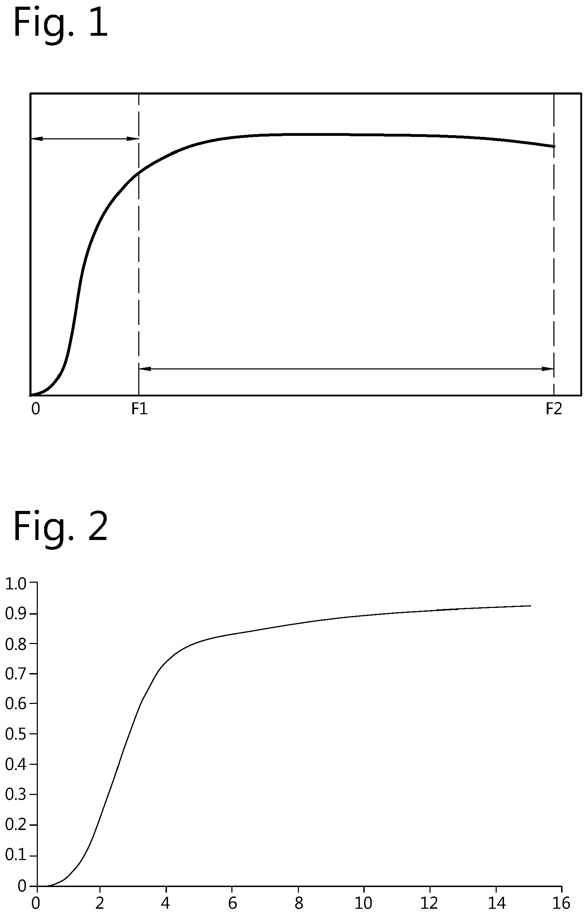

Current cancellation is not a linear process; below a threshold value of the ratio of element diameter over the penetration depth (d / δ) the heating efficiency reduces according to a sigmoid pattern (figure 1 and 2). Significant current cancellation takes place below a ratio of diameter over penetration depth of 3.2 (d/δ < 3.2), which is F1 in figure 1.

The penetration depth δ is a function of the electrical resistivity of the element (ρ) the relative magnetic permeability of the element (µᵣ) and the alternation frequency (F) of the heating coil F: δ (m) = 503 · [ρ · µᵣ⁻¹ · F⁻¹]^{0.5}.

In the state of the art, for a given material for a element (having a specific ρ and µᵣ at a given reactor temperature) and having a specific d of the element, an appropriate F is selected for which no current cancellation takes place, so for which the heating efficiency is high. The penetration depth δ relates to the frequency F wherein δ ~ F^{--0.5} (because δ (m) = 503 · [ρ · µᵣ⁻¹ - F⁻¹]^{0.5}). Therefore, the critical diameter below which current cancellation takes place is also a function of the alternation frequency F: d_{crit} ~ F^{--0.5} (because current cancellation takes place when d/δ < 3.2 and δ ~ F^{--0.5}). So, for a given frequency F lowering the d below a critical d will result in current cancellation and less heating. Or for a given diameter lowering the F below a critical F will result in current cancellation and less heating.

In Figure 1 (figure 6.19 of Handbook of Induction Heating, 2nd ed., Rudnev et al., 2017, CRC press) the coil efficiency is depicted as a function of F for a given diameter. Below a critical diameter of 3.2 (which occurs below a frequency F1) significant current cancellation occurs and the coil efficiency becomes lower. The coil efficiency ηₑₗ represents the ratio of the power induced in the element P_{W}, to the total of P_{W} and electrical losses P_{EL, LOSS}. The current cancellation may also be quantified by a power transmission factor F_{TRANS} as depicted in figure 2 (from Duquenne et al., Can. J. of Chem. Eng. 72(6), 975-981, 1994). The power transmission factor concerns the power that is transferred from the coil to the electrically conductive elements in the reactor. For a F_{TRANS} of 1 all power is transferred to the elements, for a F_{TRANS} of 0 no power is transferred to the elements. Figure 2 demonstrates the same behaviour as figure 1; below a critical diameter of 3.2 significant current cancellation occurs and the power transmission becomes lower.

### Electrically conductive elements

The the tubular reactor of the invention comprises electrically conductive elements, which are wires of an electrically conductive material, particles of an electrically conductive material and/or closed loops of connected wires of an electrically conductive material. A wire is also named a strand. Preferably the electrically conductive elements are wires and/or particles of an electrically conductive material. So, the elements are made of an electrically conductive material. When elements are mentioned in this document, electrically conductive elements are concerned. The alternating magnetic field to which the reactor is subjected induces eddy currents in the electrically conductive elements that are comprised in the reactor. In the context of induction heating of a reactor, the skilled person is fully equipped to select a suitable material. By their nature, metals and metal alloys are electrically conductive. Also several non-amorphous carbon-based materials such as carbon fibre, graphite and graphene are know for its good electrical conductivity. Typically, the skilled person will consider secondary factors such as handling, costs, melting behavior at the relevant temperature in the reactor and degradation of the material at the relevant temperature in the reactor to decide for the best suited material.

In a preferred embodiment the electrically conductive material is selected from the list of carbon fiber, graphene, graphite, iron, iron alloys, nickel, nickel alloys, cobalt, cobalt alloys and combinations thereof, more preferably the electrically conductive material is selected from the list of graphene, graphite, iron, iron alloys, nickel, nickel alloys, cobalt, cobalt alloys and combinations thereof, even more preferably the electrically conductive material is selected from the list of graphite, iron, iron alloys, and combinations thereof. Preferably the iron alloy is steel.

The electrical resistivity ρ (Ω·m) is the direct inverse of the electrical conductivity σ (S/m). Consequently, the electrical resistivity of a material is a relevant quantity for the electrical conductivity of that material. The higher the resistivity, the lower the conductivity. In the context of induction heating, so for the purpose of induction heating of reactors a material is electrically conductive when having an electrical resistivity below 1000 µΩ·m, preferably below 100 µΩ·m. The abovementioned electrically conductive materials all have an electrical resistivity that is lower than 1000 µΩ·m, preferably lower than 100 µΩ·m more preferably lower than 50 µΩ·m for all relevant temperatures for a reactor. In the context of induction heating, so for the purpose of induction heating of reactors a material is not electrically conductive when having an electrical resistivity above 1000 µΩ·m, preferably above 100 µΩ·m.

Typical electrically conductive elements that are used for induction heating are wires and/or particles. Wires are defined by a length and a diameter. The length of a wire is at least a factor 10 larger than its diameter, preferably a factor 20, more preferably a factor 50. Relatively thick wires, typically with a diameter larger than 0.5 cm are sometimes named rods. Wires typically have a circular cross-section, although oval or polygonal cross-sections are also known. Particles are known in the art and may have different shapes. Typically for a particle the maximum diameter of the particle is less than a factor 10 larger than the minimum diameter of the particle, preferably less than a factor 5. In a preferred embodiment of the invention the particles are selected from the group of spheres, discs, solid cylinders, annular pellets, trilobal pellets, irregularly shaped pellets, and any combination thereof. In a preferred embodiment, the electrically conductive elements have a diameter in the range of 0.05 - 10 cm, more preferably in the range of 0.1 - 5 cm, even more preferably in the range of 0.1 to 4 cm, even more preferably in the range of 0.2 to 3 cm. Preferably, the electrically conductive elements of the first zone have a diameter in the range of 0.05 -10 cm, more preferably in the range of 0.1 - 5 cm, even more preferably in the range of 0.1 to 4 cm, even more preferably in the range of 0.1 to 3 cm or the electrically conductive elements of the first zone have a diameter in the range of 0.1-10 cm, more preferably in the range of 0.5 - 5 cm, even more preferably in the range of 1 to 5 cm.

In one preferred embodiment of the invention the elements of an electrically conductive material are catalytic, so they catalyse a chemical reaction. For example, metal and metal alloys are known for their catalytic activity. Alternatively, the elements may be coated with a catalyst. Preferably for elements coated with a catalyst the catalyst is not electrically conductive. In this way the elements of an electrically conductive material are not shielded from the alternating magnetic field. Preferably the elements of an electrically conductive material are catalytic, or the elements of an electrically conductive material are coated with a catalyst. In a preferred embodiment the reactor comprises in addition to the elements of an electrically conductive material a solid selected from a catalyst, a sorbent, a solid reactant or a combination thereof, the elements of an electrically conductive material are catalytic and/or the elements of an electrically conductive material are coated with a catalyst. More preferably the reactor comprises in addition to the elements of an electrically conductive material a solid catalyst, the elements of an electrically conductive material are catalytic and/or the elements of an electrically conductive material are coated with a catalyst, even more preferably the reactor comprises a solid catalyst, the elements of an electrically conductive material are catalytic, or the elements of an electrically conductive material are coated with a catalyst. By having either 1) an additional solid catalyst that is present in the reactor, 2) elements of an electrically conductive material that are catalytic and/or 3) elements of an electrically conductive material that are coated with a catalyst in the reactor, catalytic functionality is present in the reactor.

### Relevant diameter of the electrically conductive elements

For eddy current cancellation the diameter d of the electrically conductive element is important. Below a certain diameter current cancellation will occur. Which diameter is relevant for current cancelation is dependent on the type of element. In the current document when referring to the diameter of an element the relevant diameter of that element is referred to. For a wire, the relevant diameter is the diameter of the wire. For a sphere, the relevant diameter is the outer diameter of the sphere. For a disc, the relevant diameter is the outer diameter of the disc. For a solid cylinder, the relevant diameter is the outer diameter of the solid cylinder. For an annular pellet, the relevant diameter is the outer diameter of the annular pellet. For a trilobal pellet, the relevant diameter is the outer diameter of the lobes of the trilobal pellet. For an irregularly shaped pellet, the relevant diameter is the largest outer diameter of the irregularly shaped pellet.

One form of the electrically conductive elements is closed loops formed by connected wires. An example of such structure is chicken wire. For such embodiment, the diameter of the loop is the relevant diameter, and the loops are the electrically conductive elements. The relevant diameter for a closed loop of connected wires is for a polygon with an even number of sides the distance between 2 opposing sides and is for a polygon with an uneven number of sides the distance between a side and its opposing angle. Preferable closed loops are triangles, squares, pentagons, hexagons, heptagons, and octagons, more preferable closed loops are squares, hexagons, and octagons. For this embodiment current cancelation occurs in the closed loops below a certain frequency. In case the electrically conductive elements are closed loops formed by connected wires, for the zone in which current cancelation takes place in the closed loops, typically also current cancelation will occur for the particles and/or wires that are present, as the relevant diameter of these particles and/or wires typically is smaller than the relevant diameter of the closed loops. The closed loops may be part of a 2-dimensional network of connected wires or a 3-dimensional network of connected wires. In a preferred embodiment the closed loops form part of a 2-dimensional network of connected wires or a 3-dimensional network of connected wires. In a preferred embodiment a zone comprises one or more 2-dimensional networks of connected wires and/or one or more of a 3-dimensional network of connected wires. The one or more 2-dimensional or one or more 3-dimensional networks preferably are distributed in such a way in a zone that the zone is evenly heated.

According to the invention each zone of the tubular reactor comprises elements of an electrically conductive material. Within a zone there may be variation in the diameter of the electrically conductive elements. The maximum diameter for the elements of a zone refers to the largest relevant diameter of the elements present in that zone. The minimum diameter for the elements for a zone refers to the smallest relevant diameter of the elements present in that zone. In a preferred embodiment the difference between the minimum and maximum diameter of the elements in a zone is less than 100% of the maximum diameter, more preferably less than 50%, more preferably less than 20%, most preferably less than 10%.

### The reactor system and the reactor

In an aspect, the invention concerns a reactor system, comprising a tubular reactor, an induction heating coil surrounding the reactor and a power source suitable for supplying an alternating current to the induction heating coil. In the context of the invention the coil is suitable for generating an alternating magnetic field within the tubular reactor when powered by the power source that supplies an alternating current. By definition, the alternation frequency of the power source is the same as alternation frequency of the magnetic field. The alternation frequency F in this document refers both to the alternation frequency of the power source and the alternation frequency of the magnetic field.

A tubular reactor takes the form of a cylindrical column having a reactor diameter and a reactor length. The reactor length is in the axial direction of the column. The reactor has two ends or opposite sides at the opposing sides of the column. The distance between these opposite sides is the length of the reactor. In view of the improved heating according to the invention, the size of the reactor is not limited. The invention can deal with reactor diameters up to 4 meter or even bigger. In a preferred embodiment, the tubular reactor has a diameter up to 4 meter.

The tubular reactor has an interior wherein a chemical reaction, physical reaction and/or separation process may occur. In a preferred embodiment the tubular reactor is for a chemical reaction and/or a sorption process. The skilled person understands that a sorption process involves adsorption and desorption. As will be understood by the skilled person, the reactor typically has one or more inlets for receiving a feed and one or more outlets for discharging a product. The interior of reactor is heated by the induction heating, which may be in view of the endothermic nature of the chemical reaction and/or sorption process, but could also be for other reasons, such as catalyst activation, start-up of a non-endothermic reaction (exothermic or autothermal reaction), sorbent activation. Preferable processes to be carried out in the tubular reactor are the reverse water-gas shift reaction, steam or dry reforming (of hydrocarbons and/or oxygenates), pyrolysis, calcination reactions, dehydrogenation of hydrocarbons, evaporation, temperature-swing adsorption, and pressure-swing adsorption, or combinations thereof.

A preferred reaction type that is to be performed in the reactor is sorption-enhanced reactions, wherein one product of the chemical reaction is removed from the equilibrium mixture by sorption which consequently pushes the equilibrium towards the product side. Such reactions typically benefit from a transient heat supply during the regeneration of the sorbent, which may be conveniently applied by the current invention.

The reactor comprises one or more solids. These one or more solids need to be heated for proper operation. The solid or solids are placed in the interior of the reactor. The solid may be a catalyst, a sorbent, a reactant, or a combination of two or all three thereof. The material of the solid is not susceptible to induction heating itself, but to heating by thermal conduction. In a preferred embodiment, the solid is a catalyst and/or a sorbent. Preferably, the solid is present in the form of particles, so as a particulate solid, such as in fixed bed reactors, moving bed reactors, rotating bed reactors, fluidized bed reactors or slurry reactors. Preferably the sorbent is for adsorbing H₂O, CO₂ and/or impurities, preferably for adsorbing H₂O or CO₂, more preferably the sorbent is selected from the list consisting of zeolites, activated carbon, metal organic frameworks (MOF), carbon molecular sieves (CMS).

Preferably the tubular reactor is a fixed bed reactor, a moving bed reactor, a rotating bed reactor, a fluidized bed reactor or a slurry reactor, more preferably the tubular reactor is a fixed bed reactor or a fluidized bed reactor, most preferably the reactor is a fixed bed reactor. For reactor types in which the solid moves, such as for example for fluidized or slurry reactors, the preferred heating elements are wires or closed loops of connected wires. Considering the electrically conductive material in the form of particles will move with the particulate solid, there will be mixing of these particles between zones which reduces the transient heating effectiveness.

As such, the solid material is perfectly compatible with the heating elements that are also comprised in the reactor. The heating elements are placed in the interior of the reactor. The material of the solid is preferably not electromagnetically shielding, such as may be the case for electrically conducting materials. Thus, in a preferred embodiment, the solid is not electrically conducting. Preferable solid materials include heterogeneous catalysts and sorbents such as metal chlorides, metal oxides, zeolites (aluminosilicates), silica gel, amorphous carbon, polymers, or mixtures thereof, including materials that are partially composed thereof.

### The electrically conductive elements in the reactor

The reactor system of the invention comprises a tubular reactor comprising elements of electrically conductive material. These elements are placed in the interior of the reactor. The tubular reactor comprises different zones. For each zone downstream of the first zone the diameter of the elements is larger than the maximum element diameter of the of the adjacent upstream zone, or for each zone downstream of the first zone the diameter of the elements is smaller than the minimum diameter of the elements of the adjacent upstream zone. So even though a zone may comprise elements having different diameters, all the elements of a zone have a larger or smaller diameter compared to the elements of the other zones.

In a preferred embodiment the elements of electrically conductive material for each zone downstream of the first zone going from inlet to outlet have a diameter between 1.3 and 5.0 times the maximum diameter of the elements of the adjacent upstream zone, preferably between 1.5 and 5.0 times, more preferably between 1.8 and 4.0 times, even more preferably between 1.8 and 3.0 times, or a have diameter between 0.20 and 0.77 times the minimum diameter of the elements of the adjacent upstream zone, preferably between 0.20 and 0.66 times, more preferably between 0.25 and 0.56 times, even more preferably between 0.33 and 0.56 times. A too small difference in diameter between the zones is not preferred as for any frequency the level of current cancellation will be about the same for both zones. A too large difference in diameter is not practical as some zone will have relatively large diameters, such large diameters are relatively inefficient for heating purposes as for large diameters the surface area is relatively small in relation to the volume.

In a preferred embodiment the tubular reactor of the invention comprises 3 zones, wherein
- the elements of electrically conductive material of the first zone have a diameter in the range of 0.5 - 5.0 mm, the elements of electrically conductive material of the second zone have a diameter in the range of 0.75 - 7.5 mm and the elements of electrically conductive material of the third zone have a diameter in the range of 1.0 - 30.0 mm, preferably 1.0 - 10 mm, or
- the elements of electrically conductive material of the first zone have a diameter in the range of 1.0 - 30.0 mm, preferably 1.0 -10 mm, the elements of electrically conductive material of the second zone have a diameter in the range of 0.75 - 7.5 mm and the elements of electrically conductive material of the third zone have a diameter in the range of 0.5 - 5.0 mm,

wherein the first zone is the zone adjacent to the one or more inlets and the third zone is the zone adjacent to the one or more outlets, or
the tubular reactor invention comprises 2 zones, wherein
   - the elements of electrically conductive material of the first zone have a diameter in the range of 0.5 - 10.0 mm and the elements of the second zone have a diameter in the range of 0.75 - 30.0 mm, preferably 0.75 - 15.0 mm, or
   - the elements of electrically conductive material of the first zone have a diameter in the range of 0.75 - 30.0 mm, preferably 0.75 - 15.0 mm and the elements of electrically conductive material of the second zone have a diameter in the range of 0.5 - 10.0 mm,
wherein the first zone is the zone adjacent to the one or more inlets and the second zone is the zone adjacent to the one or more outlets.

In a preferred embodiment the tubular reactor comprises 2 - 6 zones, preferably 2 - 5 zone, more preferably 2 - 4 zones, most preferably 2 - 3 zones.

In case wires of an electrically conductive material are present in the tubular reactor, for one embodiment preferably the wires are not connected to form closed loops. Connected loops are electrically connected loops, so that the closed loop forms a circuit. Such closed loop may generate a current through the whole loop, induced by the alternating magnetic field. This current is different compared to the local eddy currents generated in wires as the current goes round through the complete closed loop. This current through the closed loop does not cancel out beyond the cancellation frequency of the eddy currents in the wires from which the loops are made of since the diameter of the loops are significantly larger than the diameter of the wires the loops are made of. Depending on the ratio of eddy currents and the current through the closed loop the closed loops may counteract the intended transient heating. The reason is that at a frequency where eddy current cancelation occurs in the wires the closed loops still may generate a current and therewith provide heat.

In the context of the invention, the volume of the total of the elements of electrically conductive material comprised in the tubular reactor is less than 40 vol.% of the total empty reactor volume, preferably less than 30 vol.% of the total empty reactor volume, more preferably less than 20 vol.% of the total empty reactor volume. Although induction heating reactors are known that have a larger vol.% of electrically conductive elements, such larger volume is not desirable because the elements near the wall of the reactor may shield the central elements, in addition a larger vol.% leaves less room for catalyst and/or sorbent and for the reactants. Since the surface are to volume ratio is relevant for the heat that is generated by the electrically conductive elements, and since this ratio changes with diameter and the diameter varies between zones, it may be necessary to have a different vol.% on total empty reactor volume of electrically conductive elements for each zone. The skilled person is aware how to optimize this.

In a preferred embodiment for each zone the particles and/or wires of an electrically conductive material are uniformly mixed with the catalyst, sorbent, and/or solid reactant, so preferably the particles and/or wires of an electrically conductive material are uniformly distributed in each zone. In this way a uniform distribution of the particles and/or wires can be realized in the sense that the number of particles of an electrically conductive material per volume is constant over a zone. In addition, the number of particles and/or wires of an electrically conductive material per volume may differ per zone, for example to realize a same heat load for each zone.

In a preferred embodiment at least a part of the wires of a zone are attached to form one or more 2-dimensional or 3-dimensional networks wherein the wires do not form closed loops. This may for example be realized by minimizing the contact surface between different wires in the network or by making use of an additional material that is not electrically conductive and that is used to form the network together with the wires of an electrically conductive material and/or to connect the wires of electrically conductive material. The one or more 2-dimensional or 3-dimensional networks preferably are distributed in such a way in a zone that the zone is evenly heated.

For an even distribution of heat in a zone, it may be necessary to optimize the spatial distribution of the elements in that zone. A skilled person is aware how to do so. For example, the skilled person may combine for a zone uniformly distributed particles with wires placed in locations in that zone where the heating density induced by the particles is lower. In a preferred embodiment a central wire and/or several wires that are concentrically placed around the centre of the zone is combined with particles, wherein preferably the particles of an electrically conductive material are uniformly distributed in each zone. For this embodiment, the wires are aligned in the axial direction.

### Method for induction heating

The invention furthermore concerns a method for induction heating of the tubular reactor comprised in the reactor system of the invention. The interior of the reactor is heated in this method. For this method, the power source supplies an alternating current to the induction heating coil and wherein in two or more sequential steps the alternation frequency is changed. Preferably the alternation frequency for all steps is in the range of 1 Hz - 4 MHz, more preferably 500 Hz - 2 MHz. Typically, induction heating is performed over a broad range of frequencies.

For the method for induction heating the frequency increases with a factor of 1.5 or higher, preferably 2 or higher, more preferably 5 or higher compared to the frequency of the previous step wherein for each zone downstream of the first zone the diameter of the elements is smaller than the minimum diameter of the elements of the adjacent upstream zone, or the frequency decreases with a factor of 0.66 or lower preferably 0.50 or lower, more preferably 0.20 or lower compared to the frequency of the previous step wherein for each zone downstream of the first zone the diameter of the elements is larger than the maximum diameter of the elements of the adjacent upstream zone. A factor of 2.0 means that the frequency of the next step is 2.0 times greater than the frequency of the step that is being carried out. The skilled person knows how to select the frequencies to realize transient heating, based on the common knowledge and the teaching of this document, possibly in combination with experiments. The frequencies follow from the different diameters of the elements in the different zones and the material properties of the elements.

Typically, the method for induction heating is carried out between 10 and 1000 °C. A higher temperature is too costly whilst a low temperature slows down the process that is carried out. In a preferred embodiment the reactor temperature is in the range of 10 - 1000°C, more preferably in the range of 150 - 900°C, most preferably in the range of 200 - 800°C. The reactor temperature concerns the temperature of the interior of the reactor. In a preferred embodiment, the electrically conductive material at the reactor temperature has a relative magnetic permeability µᵣ that is higher than 0.5, more preferably higher than 1. A higher magnetic permeability in some cases is more efficient for induction heating. In a preferred embodiment the electrically conductive material at the reactor temperature has an electrical resistivity ρ in the range of 0.01 - 1000 µΩ·m, preferably in the range of 0.05 -100 µΩ·m. Within this range the material is electrically conductive, so susceptible to induction heating.

### General Definitions

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one". The word "about" or "approximately" when used in association with a numerical value (e.g. about 10) preferably means that the value may be the given value more or less 1% of the value.

The present invention has been described above with reference to a number of exemplary embodiments. Modifications and alternative implementations of some parts or elements are possible, and are included in the scope of protection as defined in the appended claims. All citations of literature and patent documents are hereby incorporated by reference.

The following symbols are used in this document, that represent the following quantities (the units are between brackets):
- ρ: electrical resistivity (Ω·m)
- σ: electrical conductivity (S/m)
- µᵣ: relative magnetic permeability (-)
- µ₀: magnetic permeability of free space (4π × 10⁻⁷ H/m)
- µ: magnetic permeability (H/m)
- B: magnetic flux density (Tesla, kg·s⁻²·A⁻¹)
- H: magnetic field intensity/strength (A/m)
- F: frequency (Hz)
- δ: penetration depth (m)
- d: diameter (m) - the diameter of a wire, particle or closed loop of connected wires.
- I.D.: inner diameter (m) - inner diameter of the induction heating coil.

### Example 1

Table 1 demonstrates for a stainless-steel element at 800°C the effect of F and d on the coil efficiency. Table 2 and 3 demonstrates for different 3- or 4-zone tubular reactor configurations and for different materials (wherein each zone has a different element diameter) that the heating for each zone can be adjusted by changing the frequency.

For these tables, the ratio d/δ was calculated as follows. ρ and µᵣ are temperature dependent material constants obtained from literature. For a given frequency F the penetration depth was calculated according to δ (m) = 503 · [ρ - µᵣ⁻¹ - F⁻¹]^{0.5} and for a given d the ratio d/δ was determined. Already based on this ratio it can be established if the induction heating will be efficient, as a value below 3.2 for this ratio leads to relevant current cancelation in the element. A further estimate of the coil efficiency is made based on figure 1 in which for the calculated d/δ ratio the coil efficiency is determined. decide whether the efficiency of the heating of the workpiece in the particular location in the tubular reactor is in line with the local heat demand or whether the frequency needs adjustment.

### Results from Table 1

**Table 1: d/δ and coil efficiency for ferritic stainless steel elements (ρ = 1 µΩ m, µᵣ = 1400) at 800°C as a function of d and F.**

| **Case** | **d** | **F** | **δ** | **d/δ** | **Coil efficiency** |
|---|---|---|---|---|---|
| | *mm* | *Hz* | *mm* | - | *%* |
| | | | | | |
| **A** | 1 | 200 | 0.9 | 1.1 | 4 |
| **B** | 2 | 200 | 0.9 | 1.2 | 5 |
| **C** | 4 | 200 | 0.9 | 4.4 | **73** |
| **D** | 1 | 500 | 0.60 | 1.7 | 7 |
| **E** | 2 | 500 | 0.60 | 3.3 | **38** |
| **F** | 4 | 500 | 0.60 | 6.7 | **95** |

A tubular reactor may be designed comprising elements of the electrically conductive stainless steel of table 1 with a element diameter of 2mm in a first zone and a element diameter of 4mm in a second zone, providing for a diameter ratio of 2.0. For such tubular reactor in a first step the frequency is set to 500 Hz. According to table 1 (case E and F) both zones will be heated (with a heating efficiency of 38 and 95% respectively). Subsequently the frequency is set to 200 Hz (a factor 2.5 lower) so that heating in the first zone is reduced (case B - 5% efficiency), whilst the second zone is still heated (case C - 73% efficiency). For a transient process, such tailored heating may be beneficial as the first zone is not unnecessarily heated. Considering for a given d there is a critical frequency above which current cancellation hardly takes place, there is considerable freedom to select the first frequency, there is no upper limit except for practical considerations related induction heating of reactors. Also the second frequency is not fixed, as long as it is lower than the critical frequency for the smaller d element and preferably not near the critical frequency for that d (because near that frequency the efficiency is still considerable as can be seen in figure 1). Obviously, the second frequency is downwards limited by 0 Hz and by practical considerations related to induction heating of reactors.

Alternatively, the first zone comprises elements of this electrically conductive stainless steel with an element diameter of 4mm in a first zone and a element diameter of 2mm in a second zone, providing for a diameter ratio of 0.5.

It is clear that when dimensioning of the elements in the different zone the primary concern is the ratio of the d's of these elements. Only if this ratio is sufficiently far removed from 1.0 the effect of heating one or more zones while not heating one or more other zones can be realized. The diameters and the type of electrically conductive material and the necessary frequencies can be selected based on common knowledge, as long as the ratio of the d's is sufficiently far removed from 1.0.

Although the ratio of element diameters between the different zones can also be lower than 2.0 (or higher than 0.5), a ratio too close to 1.0 will not provide for an effect as the critical frequencies for the different elements will be too close to each other and it will not be possible to have a different heating efficiency for the different the zones.

Based on table 1 a element diameter of 1mm would not be useful for the selected frequencies of 200 and 500 Hz as at both frequencies the efficiency is low. However, by increasing the frequency above 500 Hz the efficiency of an 1mm element will also increase to a high efficiency, which enables a similar effect for a 1mm and 2mm combination as for the combination of 2mm and 4mm elements. As figures 1 and 2 demonstrates this increase of frequency is not linear. However, an estimation is possible. As explained d_{crit} ~ F^{--0.5}, by using this formula it can be expected that at higher frequencies such as above about 1000 Hz also the 1mm element will provide for high efficiency (using that a 2mm element has a good efficiency at 500 Hz this translates to a 1 mm element has a good efficiency at 1250 Hz; d₁ₘₘ / d₂ₘₘ ~ F₁ₘₘ^{--0.5} / F₂ₘₘ^{--0.5}, so 1mm / 2mm ~ F₁ₘₘ^{-0.5} / 500 Hz^{-0.5} , so F_{1 mm} = 1250 Hz). Actually, a 3-zone tubular reactor may be designed with electrically conductive elements of 1mm, 2mm and 4mm, wherein the first zone comprises elements with a d of 1mm, the second zone comprises elements with a d of 2mm and the third zone comprises elements with an d of 4mm. Het heat load for zones 1 and 2 can sequentially be lowered by first having 1250 Hz for the alternation frequency F, then having 500 Hz for F and finally having 200 Hz for F. In an alternative design the d decreases for each zone.

### Results from Table 2

Table 2 demonstrates that by adapting the frequency over time transient heating can be realized. At a frequency of 0.5 kHz, zone 4 is fully heated whilst zone 3 is moderately heated. Although not shown in the table, lowering the frequency would further reduce the heating in zone 3, whilst keeping a high coil frequency in zone 4. Subsequent increasing the frequency in step turns on the heating in other zones. More frequently the other route would be selected, first heating all of the zones by selecting 5 kHz, and subsequent lowering of the frequency and therewith turning down the heating in the zones where heating is no longer needed. A ratio of 2 : 1.5 (1 : 0.75) or 1.5 : 2 (1 : 1.33) seems already sufficient to differentiate the heating between zones, considering the difference between zone 2 and 3.

**Table 2: d/δ and coil efficiency for ferritic stainless-steel elements (ρ = 1 µΩ m, µᵣ = 1400) at 800°C for a four-zone tubular reactor having a different element d for each zone and applying different F to the tubular reactor.**

| **Zone** | **d** | **F** | **δ** | **d/δ** | **Coil efficiency** |
|---|---|---|---|---|---|
| | *mm* | *kHz* | *mm* | - | *%* |
| **1** | 1 | 5 | 0.19 | 5.3 | **92** |
| **2** | 1.5 | 5 | 0.19 | 7.9 | **95** |
| **3** | 2 | 5 | 0.19 | 11 | **95** |
| **4** | 4 | 5 | 0.19 | 21 | **95** |
| | | | | | |
| **1** | 1 | 1 | 0.43 | 2.4 | 12 |
| **2** | 1.5 | 1 | 0.43 | 3.5 | **47** |
| **3** | 2 | 1 | 0.43 | 4.7 | **86** |
| **4** | 4 | 1 | 0.43 | 9.4 | **95** |
| | | | | | |
| **1** | 1 | 0.5 | 0.60 | 1.7 | 7 |
| **2** | 1.5 | 0.5 | 0.60 | 2.5 | 14 |
| **3** | 2 | 0.5 | 0.60 | 3.3 | 38 |
| **4** | 4 | 0.5 | 0.60 | 6.7 | **95** |

### Results from Table 3

In table 3 transient heating for a three-zone reactor is demonstrated. Compared to table 2 only the material of the heating elements is different, leading to that the cancellation frequency is different. Clearly with a different electrically conductive material the same transient heating can be obtained, albeit different frequencies need to be selected for that.

**Table 3: d/δ and coil efficiency for graphite elements (ρ = 8 µΩ m, µᵣ = 1) at 800°C for a three-zone tubular reactor having a different element d for each zone and applying different F to the tubular reactor.**

| **Zone** | **d** | **F** | **δ** | **d/δ** | **Coil efficiency** |
|---|---|---|---|---|---|
| | *mm* | *kHz* | *mm* | - | *%* |
| **1** | 0.5 | 160000 | 0.11 | 4.4 | **81** |
| **2** | 2 | 160000 | 0.11 | 17.8 | **95** |
| **3** | 5 | 160000 | 0.11 | 44.5 | **95** |
| | | | | | |
| **1** | 0.5 | 16000 | 0.36 | 1.4 | 6 |
| **2** | 2 | 16000 | 0.36 | 5.6 | **93** |
| **3** | 5 | 16000 | 0.36 | 14.1 | **95** |
| | | | | | |
| **1** | 0.5 | 1600 | 1.12 | 0.4 | 5 |
| **2** | 2 | 1600 | 1.12 | 1.8 | 7 |
| **3** | 5 | 1600 | 1.12 | 4.4 | **81** |

### Example 2

The tubular reactor configurations and/or methods of example 1 can be used for an adsorbent bed reactor. In a first step the adsorbent in such bed typically is saturated with an adsorbate, and in a second regeneration step this adsorbate needs to be desorbed so that the bed is available for further adsorption. Desorption may be by providing heat.

Given a zeolite or active carbon bed of adsorbent for the removal of water from a gas stream, as is known from the art (Sircar, S., & Myers, A. L. (2003). Gas separation by zeolites. Handbook of zeolite science and technology, 22, 9780203911167-27*;* Boll, W., Hochgesand, G., Higman, C., Supp, E., Kalteier, P., Müller, W. D., ... & Tanz, H. (2000). Gas production, 3. Gas treating. Ullmann's encyclopedia of industrial chemistry*. (E.g., Section 6.2);* Sircar, S., Golden, T. C., & Roo, M. B. (1996). Activated carbon for gas separation and storage. Carbon, 34(1), 1-12*).* In the regeneration step, a steam-saturated bed is contacted with a dry carrier gas to desorb water from the adsorbent. In time, the bed gradually becomes free of water, until it is completely dry.

Figure 3 shows the state of the bed at an intermediate stage of the regeneration process. Clearly, a heat demand exists in the mass transfer zone in the middle of the bed, and to a certain extent towards the downstream half of the bed. This heat can be supplied with elements of different diameter Below a critical d/δ of 3.2 the power transmission factor decreases due to current cancellation.

2 C). Importantly, at the start of the process, heat is required at the zone nearest to the feed, which is realised by having a relative high alternation frequency of the magnetic field. In a next step, the frequency of the magnetic field is stepwise reduced to make sure the downstream zones of the bed receive the largest part of the heat and the upstream zones are not unnecessarily heated.

Shown here for the regeneration of an adsorption bed, but to be extended to other transient processes with a heat demand, the present invention provides a means to dynamically provide heat via induction in the specific parts of the bed where the heat is required.

## Claims

**1.** Reactor system comprising a tubular reactor and an induction heating coil surrounding the tubular reactor and a power source suitable for supplying an alternating current to the induction heating coil,
wherein the tubular reactor comprises elements of an electrically conductive material and a solid selected from a catalyst, a sorbent, a solid reactant or a combination thereof,
wherein the tubular reactor comprises one or more inlets and one or more outlets wherein the one or more inlets and the one or more outlets are placed on the opposite sides of the tubular reactor,
wherein the tubular reactor is divided in different zones, wherein the zones are adjacent to each other going from the one or more inlets to the one or more outlets, wherein
- for each zone downstream of the first zone the diameter of the elements is larger than the maximum element diameter of the of the adjacent upstream zone, or
- for each zone downstream of the first zone the diameter of the elements is smaller than the minimum diameter of the elements of the adjacent upstream zone,
and wherein
- the elements have a diameter in the range of 0.1 - 30 mm,
- the volume of the total of the elements of electrically conductive material comprised in the tubular reactor is less than 40 vol.% of the total empty reactor volume, and
- the alternation frequency of the alternating current is adjustable,
wherein the first zone is the zone adjacent to the one ore more inlets and wherein the elements are wires, particles and/or closed loops of connected wires.

**2.** The reactor system according to claim 1, wherein the electrically conductive material is selected from the list of carbon fiber, graphene, graphite, iron, iron alloys, nickel, nickel alloys, cobalt, cobalt alloys and combinations thereof, preferably the electrically conductive material is selected from the list of graphene, graphite, iron, iron alloys and combinations thereof.

**3.** The reactor system according to claim 1 or 2, wherein the elements of electrically conductive material for each zone downstream of the first zone going from inlet to outlet have:
- a diameter between 1.3 and 5.0 times the maximum diameter of the elements of the adjacent upstream zone, preferably between 1.5 and 5.0 times, or
- a diameter between 0.20 and 0.77 times the minimum diameter of the elements of the adjacent upstream zone, preferably between 0.20 and 0.66 times.

**4.** The reactor system according to any one of the previous claims, wherein the tubular reactor comprises 2 - 6 zones, preferably 2 - 5 zone, more preferably 2 - 4 zones, most preferably 2 - 3 zones.

**5.** The reactor system according to any one of the preceding claims wherein the reactor comprises a catalyst and/or a sorbent, preferably a particulate catalyst and/or a particulate sorbent.

**6.** The reactor system according to claim 5 wherein the sorbent is for adsorbing H₂O, CO₂ and/or impurities, preferably for adsorbing H₂O or CO₂, more preferably the sorbent is selected from the list consisting of zeolites, activated carbon, metal organic frameworks (MOF), carbon molecular sieves (CMS).

**7.** Method for induction heating of the tubular reactor comprised in the reactor system according to any one of claims 1 - 6 wherein the power source supplies an alternating current to the induction heating coil and wherein in two or more sequential steps the alternation frequency is changed, wherein for each step:
- the frequency increases with a factor of 1.5 or higher compared to the frequency of the previous step wherein for each zone downstream of the first zone the diameter of the elements is smaller than the minimum diameter of the elements of the adjacent upstream zone, or
- the frequency decreases with a factor of 0.66 or lower compared to the frequency of the previous step wherein for each zone downstream of the first zone the diameter of the elements is larger than the maximum diameter of the elements of the adjacent upstream zone.

**8.** Method according to claim 7, wherein the alternation frequency for all steps is in the range of 1 Hz - 4 MHz, preferably 500 Hz - 2 MHz.

**9.** The method of any one of claims 7-8 wherein the reactor temperature is in the range of 10 - 1000°C, preferably in the range of 150 - 900°C, most preferably in the range of 200 - 800°C.

**11.** The method according any one of claims 7-9, wherein the electrically conductive material at the reactor temperature has a relative magnetic permeability µᵣ that is higher than 0.5, preferably higher than 1.

**12.** The method according to claim 10 or 11, wherein the electrically conductive material at the reactor temperature has an electrical resistivity ρ in the range of 0.01 - 1000 µΩ·m, preferably in the range of 0.05 -100 µΩ·m.

**13.** Method for desorbing an adsorbate from a sorbent that is placed in the tubular reactor comprised in the reactor system of any one of claims 1 - 6 wherein the tubular reactor is heated according to the method for induction heating according to any one of claims 7 - 12, wherein the sorbent preferably is in the form of a particulate solid and wherein the adsorbate that is desorbed from the sorbent exits the reactor through the one or more outlets, preferably wherein a feed is provided through the one or more inlets in the form of a carrier gas.

**14.** Method for carrying out an endothermic reaction in in the tubular reactor comprised in the reactor system of any one of claims 1 - 6 wherein the tubular reactor is heated according to the method for induction heating according to any one of claims 7 - 11, wherein the tubular reactor comprises a catalyst preferably in the form of a particulate solid and wherein the reaction product exits the reactor through the one or more outlets and a feed is provided through the one or more inlets, preferably wherein the reaction is selected from the list consisting of steam reforming, reverse water-gas shift reaction and ammonia decomposition.
